# EUROPÄISCHE PATENTANMELDUNG

(11) **EP 1 378 294 A2**
(43) Veröffentlichungstag der Anmeldung: **07.01.2004**
(21) Anmeldenummer: 03014684.9
(22) Anmeldetag: 27.06.2003
(51) Int. Cl.: B05B 15/04, B05B 15/12

(54) **Pulverbeschichtungsanlage**

(30) Priorität: 06.07.2002 DE 10230595
(71) Anmelder: Göttling, Manfred, 42697 Solingen (DE)
(72) Erfinder: Göttling, Manfred, 42697 Solingen (DE)
(74) Vertreter: Patentanwälte Lippert, Stachow, Schmidt & Partner

(57) **Zusammenfassung**

Die Erfindung betrifft eine Vorrichtung zur Pulverbeschichtung, mit wenigstens einer Transporteinrichtung (4) zur kontinuierlichen Zuführung zu beschichtender Werkstücke (5) mit wenigstens zwei beiderseits der Transporteinrichtung (4) innerhalb eines Beschichtungsbereichs angeordneten Sprüheinrichtungen (7) und mit jeweils den Sprüheinrichtungen zugeordneten Auffangeinrichtungen für überschüssiges Pulver. Die Auffangeinrichtungen werden jeweils durch Kabinensegmente (13) gebildet, die jeweils als Teil eines drehbaren Sprühstandes ausgebildet sind, der jeweils zwei Kabinensegmente aufweist, die wechselweise einsetzbar sind (Figur 3).

## Beschreibung

Die Erfindung betrifft eine Vorrichtung zur Sprüh-Beschichtung von Werkzeugen, insbesondere zur Pulverbeschichtung. Solche Pulverbeschichtungsanlagen sind in Form von offenen Handsprühständen sowohl als auch in Form von voll- und teilautomatischen Pulverbeschichtungsanlagen mit geschlossenen Pulverbeschichtungskabinen bekannt.

Üblicherweise wird der bei der Pulverbeschichtung anfallende "Overspray", d. h. das nicht dem zu beschichtenden Werkstück anhaftende Pulver, wiederverwendet. Zu diesem Zweck wird dieses Pulver abgesaugt und die wiederverwendbare Kornfraktion desselben über Zyklone abgeschieden.

Es ist bekannt, dass der wiederverwendete "Overspray" nur aus einem einzigen Farbton bestehen darf, geringste Verunreinigungen machen das aufgefangene Material unbrauchbar. Wenn bei der Beschichtung Farbwechsel vorgenommen werden, ist deshalb eine gründliche Reinigung entweder der Sprühstände oder der Beschichtungskabinen erforderlich. Diese Problematik ist hinlänglich bekannt.

Die gründliche Reinigung der Sprühstände, Kabinen und Werkzeuge, beispielsweise Sprühpistolen oder Injektoren ist zeitaufwändig und bedeutet Stillstand der Beschichtungsanlage.

Es gibt daher zahllose Bemühungen, Pulverbeschichtungseinrichtungen möglichst so auszubilden, dass diese einfach und schnell zu reinigen sind. Bekanntermaßen wird der Reinigungsvorgang dadurch erschwert, dass das Pulver elektrostatisch aufgeladen ist und daher hartnäckig an den Beschichtungswerkzeugen und an der Pulverbeschichtungskabine haftet.

Es sind Pulverbeschichtungskabinen mit Selbstreinigungseinrichtungen bekannt. Dies sind vielfach recht umständliche Konstruktionen, die aufwändig zu erstellen sind. Eine Pulverbeschichtungskabine, bei der der Reinigungsvorgang so optimiert ist, dass besonders schnelle Farbwechsel möglich sind, ist beispielsweise aus der DE 197 22 773 C1 bekannt.

Aus dem US-Patent Nr. 5,288,324 ist ein einseitig offener Pulversprühstand bekannt, der durch eine drehbare Kabine mit einer zentralen Absaugung gebildet wird. Die Kabine bildet mehrere Kabinensegmente aus, die durch sich jeweils radial erstreckende Seitenwandelemente begrenzt werden. Die Kabinensegmente öffnen sich jeweils in Richtung auf die zu beschichtenden Bauteile, die hängend an einer Transporteinrichtung an der Kabine vorbeigeführt werden. Bei Einsatz von verschiedenen Beschichtungsfarben soll bei der bekannten Beschichtungskabine jeweils der Overspray einer Farbe getrennt abgesaugt werden. Dafür ist jedem Kabinensegment eine Beschichtungsfarbe zugeordnet. Der Farbwechsel kann hierdurch verhältnismäßig einfach durch Drehung der Kabine vollzogen werden.

Die aus dem US-Patent bekannte Anordnung ermöglicht zwar einen verhältnismäßig bequemen und schnellen Farbwechsel, jedoch wird bei dieser Anordnung nicht gewährleistet, dass vagabundierende Pulverpartikel verschiedenster Farben sich nicht vermischen, insbesondere wegen der räumlichen Nähe der mit unterschiedlichen Farben zu beaufschlagenden Segmente des Pulversprühstandes.

Schließlich handelt es sich um einen offenen Pulversprühstand, der so konstruiert ist, dass die zu beschichtenden Bauteile an der Transporteinrichtung außerhalb des Sprühstandes bzw. außerhalb der Pulverbeschichtungskabine geführt werden. Dies wird auch als ungünstig erachtet.

Der Erfindung liegt die Aufgabe zugrunde, eine Pulverbeschichtungseinrichtung zu schaffen, die besonders einfache und schnelle Farbwechsel ohne zwischengeschaltete Reinigungszyklen ermöglicht.

Die Aufgabe wird gelöst durch eine Vorrichtung zur Sprüh-Beschichtung von Werkstücken, insbesondere zur Pulverbeschichtung, mit wenigstens einer Transporteinrichtung zur kontinuierlichen Zuführung zu beschichtender Werkstücke, mit wenigstens zwei beiderseits der Transporteinrichtung innerhalb eines Beschichtungsbereichs angeordneten Sprüheinrichtungen und mit jeweils den Sprüheinrichtungen zugeordneten Auffangeinrichtungen für überschüssiges Pulver, wobei die Auffangeinrichtungen jeweils durch Kabinensegmente gebildet werden und die Kabinensegmente jeweils als Teil eines drehbaren Sprühstandes ausgebildet sind, der wenigstens zwei Kabinensegmente aufweist, die wechselweise einsetzbar sind.

Die Erfindung lässt sich wie folgt zusammenfassen. Erfindungsgemäß wird bei einer automatischen Pulverbeschichtungseinrichtung an Stelle einer geschlossenen Pulverbeschichtungskabine eine wechselseitige Anordnung von Sprühständen beiderseits einer Transporteinrichtung gewählt, wobei jeder der Sprühstände revolvierbare Kabinensegmente aufweist, die wechselweise einsetzbar sind. So lässt sich ein Farbwechsel einfach durch Drehung beider Sprühstände innerhalb von Sekunden vollziehen. Die jeweils außer Eingriff gebrachten Kabinensegmente können gereinigt werden, während der Beschichtungsvorgang mit einer anderen Farbe ununterbrochen fortgesetzt wird.

Die gesamte Anordnung kann in einem mehr oder weniger geschlossenen Beschichtungsbereich untergebracht werden, der eine zentrale oder mehrere Absaugungen aufweist. Besonders bevorzugt wird eine Ausführungsform, bei der die beiderseits der Transporteinrichtung angeordneten Sprühstände in Transportrichtung der zu beschichtenden Werkstücke mit Abstand zueinander angeordnet sind.

Es ist somit ohne weiteres möglich, jeweils einen Sprühstand und eine automatische Sprüheinrichtung einander gegenüberliegend anzuordnen. Die Transporteinrichtung ist zweckmäßigerweise als Kettenförderer ausgebildet, an der die Werkstücke hängend zwischen den Sprühständen transportiert werden.

Es ist selbstverständlich möglich, in wechselweiser Anordnung mehr als zwei derartiger Sprühstände beiderseits der Transporteinrichtung anzuordnen.

In bevorzugter Weiterbildung der Erfindung ist vorgesehen, dass jedem Sprühstand eine auf einem Hubgestell geführte Sprüheinrichtung zugeordnet ist.

Wie vorstehend bereits ausgeführt, kann jede der Sprüheinrichtungen auf der dem Sprühstand abgekehrten Seite der Transporteinrichtung dieser gegenüberliegend angeordnet sein.

Vorzugsweise werden die Kabinensegmente der Sprühstände durch jeweils kreissegmentförmige, konkave Wandschirme gebildet. Die konkave Ausformung der Kabinensegmente hat sich unter Reinigungsgesichtspunkten als besonders günstig erwiesen.

Die Wandschirme können jeweils mit ihrer Scheitellinie gegeneinanderliegend zueinander auf einem Bodenelement angeordnet sein.

Vorzugsweise weisen die Sprühstände jeweils kreisrunde Dachund Bodenelement auf.

Diese können jeweils eine Pulverabsaugeinrichtung aufweisen oder an eine solche angeschlossen sein. Vorteilhafterweise sind die Sprühstände jeweils mit einem diese durchsetzenden Abluftkanal versehen.

Besonders vorteilhaft ist es, wenn der Krümmungsradius der Wandschirme deutlich größer als der Radius der Bodenelemente ist.

Dadurch ist es möglich, die Sprühstände so anzuordnen, dass die Projektion der Transporteinrichtung in der Fläche der Bodenelemente angeordnet ist. Hierdurch ist gewährleistet, dass der Overspray möglichst weitestgehend innerhalb des jeweiligen Sprühstandes verbleibt.

Zweckmäßigerweise sind die Sprühstände so angeordnet, dass die Projektion der Transporteinrichtung in der Fläche der Bodenelemente angeordnet ist.

Die Erfindung wird nachstehend anhand eines in den Zeichnungen dargestellten Ausführungsbeispiels erläutert.

Es zeigen:
- Figur 1: eine schematische Draufsicht auf die Pulverbeschichtungseinrichtung gemäß der Erfindung,

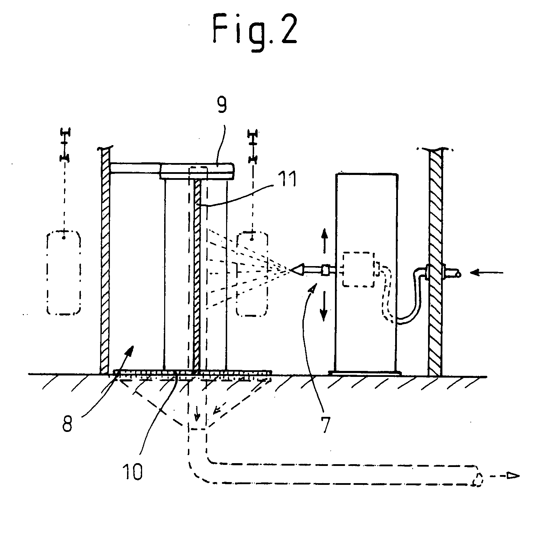

- Figur 2: einen Querschnitt durch einen Sprühstand entlang der Linien II-II in Figur 1 und

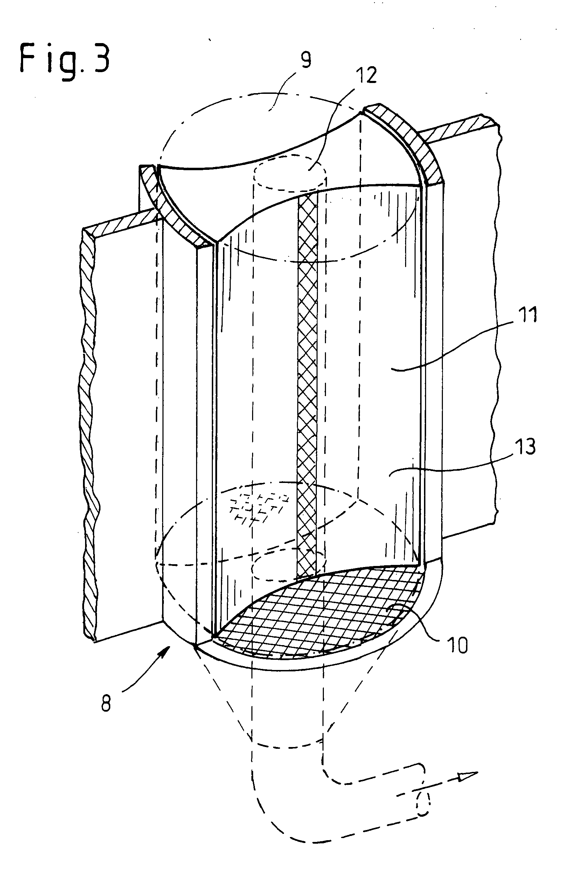

- Figur 3: eine perspektivische Ansicht einer Pulverkabine gemäß der Erfindung.

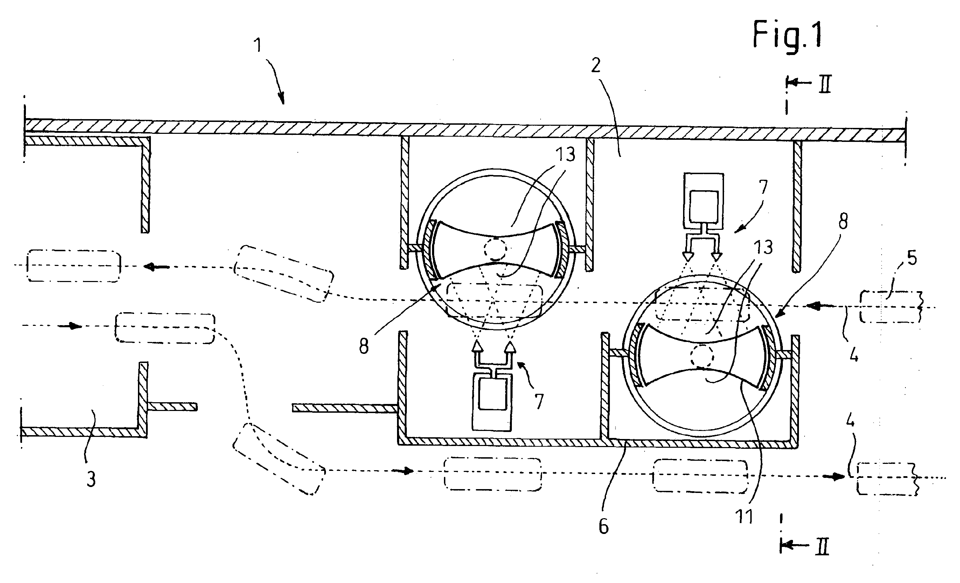

Die in Figur 1 dargestellte Pulverbeschichtungseinrichtung 1 umfasst einen Beschichtungsbereich 2 sowie einen Einbrennbereich 3. Der Beschichtungsbereich 2 sowie der Einbrennbereich 3 werden von einer Transporteinrichtung 4 durchzogen, an der die zu beschichtenden Werkstücke 5 hängend an nicht dargestellten Hakenaufnahmen geführt sind.

Der Beschichtungsbereich 2 ist durch eine äußere Umfassungswand 6 weitestgehend gegenüber den übrigen Bereichen der Pulverbeschichtungseinrichtung abgetrennt. Innerhalb des Beschichtungsbereichs 2 sind beiderseits der Transporteinrichtung 4 zwei Sprüheinrichtungen 7 in Form von Hubgestellen mit vertikal beweglichen Düsenstöcken angeordnet, aus welchen elektrostatisch aufgeladenes Pulver (Triboaufladung bei Austritt aus dem Düsenkopf) in Richtung auf die Werkstücke 5 ausgestoßen wird. Die Sprüheinrichtungen 7 sind in Längsrichtung der Transporteinrichtung 4 mit Abstand zueinander angeordnet, wobei jede Sprüheinrichtung 7 eine Seite des zu beschichtenden Werkstücks 5 bestreicht.

Den Sprüheinrichtungen 7 jeweils gegenüberliegend angeordnet sind Auffangeinrichtungen für überschüssiges Pulver, d. h. den sogenannten Overspray, in Form von drehbaren Sprühständen 8, die dadurch zwangsläufig ebenfalls in Längsrichtung der Transporteinrichtung 4 zueinander versetzt angeordnet sind.

Die Sprühstände 8 umfassen jeweils Dachelemente 9 und Bodenelemente 10, zwischen denen sich leicht gekrümmte, konvexe Wandschirme 11 erstrecken. Jeweils zwei Wandschirme 11 eines Sprühstandes 8 sind mit ihren Scheitellinien zueinander zwischen den Dach- und Bodenelementen 9, 10 angeordnet, wobei jeder Wandschirm 11 je nach Winkelstellung des Sprühstandes 8 ein sich in Richtung auf das Werkstück 5 öffnendes Kabinensegment bildet.

Die Drehachse eines jeden Sprühstandes 8 wird durch einen zentral angeordneten Absaugkanal 12 gebildet, über welchen das bei der Beschichtung anfallende überschüssige Pulver abgeführt wird. Dieses gelangt dann über nicht dargestellte Zyklone in ebenfalls nicht dargestellte Pulverrückgewinnungsbehälter.

Der Absaugkanal 12 kann mit dem gesamten Sprühstand 8 drehbar ausgebildet sein, alternativ ist es jedoch selbstverständlich möglich, diesen bezüglich des Sprühstandes 8 drehfest anzuordnen.

Es ist ebenso selbstverständlich, dass die Absaugung sowohl oberhalb als auch unterhalb des Sprühstandes 8 erfolgen kann.

In dem jeweils von den Wandschirmen 11 umschlossenen Bereich der Bodenelemente 10 sind diese als Roste ausgebildet, durch die das abzusaugende Pulver fallen kann. Der jeweils rückwärtige, an den Absaugkanal 12 angrenzende Bereich der Wandschirme 11 ist ebenfalls für Pulver und/oder Luft durchlässig ausgebildet.

Die Sprühstände 8 sind jeweils um ihre symmetrische Längsachse drehbar angeordnet, wobei die kreisrund ausgebildeten Dach- und Bodenelemente 9, 10 starr mit den Wandschirmen 11 verbunden sind, so dass jeweils eines von zwei Kabinensegmenten 13 eines Sprühstandes 8 bei Betrieb der Pulverbeschichtungseinrichtung 1 einsetzbar ist, d. h. gegenüber der jeweiligen Sprüheinrichtung 7 platzierbar ist.

Soll nun die Pulverbeschichtungseinrichtung auf eine andere Beschichtungsfarbe umgestellt werden, so ist es lediglich erforderlich, den Beschichtungsvorgang nur kurzzeitig zu unterbrechen, jeden der Sprühstände 8 um 180 ° zu drehen, so dass jeder Sprüheinrichtung 7 ein zwischenzeitlich gereinigtes Kabinensegment 13 gegenüberliegend angeordnet ist.

Selbstverständlich sind die Sprühstände 8 hierzu beiderseitig zugänglich, was in der Zeichnung nicht dargestellt ist.

Wie aus der in Figur 1 dargestellten Draufsicht ersichtlich ist, sind die Wandschirme 11 und ihre Anordnung bezüglich der Dach- und Bodenelemente 9, 10 so gewählt, dass die Sprühstände 8 beiderseits der Transporteinrichtung 4 möglichst nah an diese herangeführt sein können und dass gewährleistet ist, dass die zu beschichtenden Werkstücke 5 während der Beschichtung jeweils über den Bodenelementen 10 der Sprühstände 8, d. h. jeweils über der Absaugung, angeordnet sind. Hierzu ist erfindungsgemäß vorgesehen, dass der Krümmungsradius der Wandschirme 11 wesentlich größer gewählt ist als der Radius der Dach- und Bodenelemente 9, 10.

### Bezugszeichenliste

- 1: Pulverbeschichtungseinrichtung
- 2: Beschichtungsbereich
- 3: Einbrennbereich
- 4: Transporteinrichtung
- 5: Werkstücke
- 6: Umfassungswand
- 7: Sprüheinrichtungen
- 8: Sprühstände
- 9: Dachelemente
- 10: Bodenelemente
- 11: Wandschirme
- 12: Absaugkanal
- 13: Kabinensegment

## Patentansprüche

1. Vorrichtung zur Sprüh-Beschichtung von Werkstücken (5), insbesondere zur Pulverbeschichtung, mit wenigstens einer Transporteinrichtung (4) zur kontinuierlichen Zuführung zu beschichtender Werkstücke (5), mit wenigstens zwei beiderseits der Transporteinrichtung (4) innerhalb eines Beschichtungsbereichs (2) angeordneten Sprüheinrichtungen (7) und mit jeweils den Sprüheinrichtungen (7) zugeordneten Auffangeinrichtungen für überschüssiges Pulver, wobei die Auffangeinrichtungen jeweils durch Kabinensegmente (13) gebildet werden und die Kabinensegmente (13) jeweils als Teil eines drehbaren Sprühstandes (8) ausgebildet sind, der wenigstens zwei Kabinensegmente (13) aufweist, die wechselweise einsetzbar sind.

2. Vorrichtung nach Anspruch 1, **dadurch gekennzeichnet, dass** die beiderseits der Transporteinrichtung (4) angeordneten Sprühstände (8) in Transportrichtung der zu beschichtenden Werkstücke (5) mit Abstand zueinander angeordnet sind.

3. Vorrichtung nach Anspruch 2, **dadurch gekennzeichnet, dass** jedem Sprühstand (8) eine auf einem Hubgestell geführte Sprüheinrichtung (7) zugeordnet ist.

4. Vorrichtung nach einem der Ansprüche 2-4, **dadurch gekennzeichnet, dass** jede Sprüheinrichtung (7) auf der dem Sprühstand (8) abgekehrten Seite der Transporteinrichtung (4) dieser gegenüberliegend angeordnet ist.

5. Vorrichtung nach einem der Ansprüche 1-4, **dadurch gekennzeichnet, dass** die Kabinensegmente (13) der Sprühstände (8) durch jeweils kreissegmentförmige, konkave Wandschirme (11) gebildet werden.

6. Vorrichtung nach Anspruch 5, **dadurch gekennzeichnet, dass** die Wandschirme (11) jeweils mit ihrer Scheitellinie gegeneinanderliegend zueinander auf einem Bodenelement (19) angeordnet sind.

7. Vorrichtung nach einem der Ansprüche 1-6, **dadurch gekennzeichnet, dass** die Sprühstände (8) jeweils kreisrunde Dach- und Bodenelemente (9, 10) aufweisen.

8. Vorrichtung nach Anspruch 7, **dadurch gekennzeichnet, dass** die Sprühstände (8) jeweils eine Pulverabsaugeinrichtung aufweisen oder an eine solche angeschlossen sind.

9. Vorrichtung nach Anspruch 7, **dadurch gekennzeichnet, dass** der Krümmungsradius der Wandschirme (11) deutlich größer als der Radius der Bodenelemente (9) ist.

10. Vorrichtung nach einem der Ansprüche 1-9, **dadurch gekennzeichnet, dass** die Sprühstände (8) so angeordnet sind, dass die Projektion der Transporteinrichtung (4) in der Fläche der Bodenelemente (9) angeordnet ist.
